# NEUE EUROPÄISCHE PATENTSCHRIFT

(11) **EP 2 352 788 B2**
(45) Veröffentlichungstag und Bekanntmachung des Hinweises auf die Entscheidung über den Einspruch: **19.10.2016**
(45) Hinweis auf die Patenterteilung: 06.03.2013
(21) Anmeldenummer: 10781881.7
(22) Anmeldetag: 18.11.2010
(51) Int. Cl.: C09J 133/06, C09J 11/06, C08K 5/37, C08K 5/375, C09J 11/08, C09J 7/02, C08K 5/13

(54) **VERFAHREN ZUR STABILISIERUNG VON POLYACRYLATHAFTKLEBEMASSEN IN ABMISCHUNG MIT KLEBHARZEN**
STABILISATION PROCESS OF PRESSUR SENSITIVE ADHESIVES OF POLYACRYLATE ADMIXED WITH ADHESIVE RESINS
PROCÉDÉ DE STABILISATION D'ADHÉSIFS SENSIBLES À LA PRESSION À BASE DE POLYACRYLATE MÉLANGÉS AVEC DES RÉSINES ADHÉSIVES

(30) Priorität: 16.12.2009 DE 102009054788
(43) Veröffentlichungstag der Anmeldung: 10.08.2011
(73) Patentinhaber: tesa SE, 22848 Norderstedt (DE)
(72) Erfinder: SPIES, Manfred, 24576 Bad Bramstedt (DE); LÜHMANN, Bernd, 22844 Norderstedt (DE)
(86) Internationale Anmeldenummer: PCT/EP2010/067732
(87) Internationale Veröffentlichungsnummer: WO 2011/072977

(56) Entgegenhaltungen:
- EP-A1- 2 048 210
- WO-A1-2006/027387
- WO-A1-2008/110483
- WO-A1-2008/148721
- WO-A1-2009/144305

## Beschreibung

Die Erfindung betrifft ein Verfahren zur Stabilisierung von Polyacrylathaftklebemassen in Abmischung mit Klebharzen.

Polyacrylate auf Basis von Acrylsäureestern mit definierten Kettenlängen der Esterseitengruppen zeigen haftklebrige Eigenschaften. Geht die Länge der Esterseitengruppen über ein bestimmtes Maß hinaus, so gehen die haftklebrigen Eigenschaften aufgrund der Kristallisation des Copolymeren verloren.

Polyacrylate zeigen ein weitreichendes Eigenschaftsprofil verglichen mit den anderen üblichen Gerüstpolymeren für Haftklebstoffe. Das Polyacrylat-Gerüstpolymer weist keine Doppelbindungen auf ("gesättigtes Sytem") und ist damit sehr stabil gegenüber Alterungsprozessen. Es ist transparent, farblos und erweist sich auch unter UV-Exposition als außergewöhnlich stabil. Aufgrund dieser Gegebenheiten ist auch der Zusatz von Alterungsschutzmittel- oder Lichtschutzmittelpaketen zu Polyacrylaten im Gegensatz zu z.B. Naturkautschuk- oder Styrolblockcopolymer-basierenden Haftklebemassen nicht zwingend notwendig.

Ungesättigte Verbindungen bedürfen eines Alterungsschutzes. Hinsichtlich der Alterungsschutzmittel ist grundsätzlich zu unterscheiden zwischen primären und sekundären Antioxidantien. Die primären Antioxidantien greifen kettenabbrechend in den Kettenfortpflanzungsschritt ein, während die sekundären oder präventiven Antioxidantien Hydroperoxidgruppen zerstören, welche Kettenstart oder Kettenverzweigung auslösen.

Übertroffen in ihrem Alterungsverhalten werden die Polyacrylate von Siliconhaftklebemassen, die aber sigifikant teurer sind.

Die Möglichkeit, das gewünschte klebtechnische Eigenschaftsprofil von haftklebrigen Polyacrylaten nur über die Copolymerzusammensetzung einzustellen, ist jedoch limitiert. Aus diesem Grunde müssen auch Polyacrylathaftklebemassen häufig klebrig machende Harze hinzugefügt werden.

Als Harzkomponente für Polyacrylate kommen grundsätzlich sowohl synthetischer Harze wie z.B. Terpenphenolharze oder auch Klebharze vom Kohlenwasserstofftyp, als auch Naturharze wie z.B. Kolophoniumderivate oder Polyterpene in reiner Form oder als Mischung verschiedener Harze in Betracht.

Polyacrylate sind polare Gerüstpolymere. Damit ein Klebharz wirksam in einem elastomeren Gerüstpolymer klebrig machende Wirkung zeigt, müssen grundsätzlich mehrere Kriterien erfüllt sein. Das Klebharz muss zum einen mit dem Gerüstpolymer kompatibel sein. Des Weiteren sollte der Glasübergangspunkt des Klebharzes signifikant über dem Glasübergangspunkt des Elastomeres liegen. Ergänzend dazu sollte die Molmasse des Klebharzes deutlich niedriger sein, als die Molmasse des elastomeren Gerüstpolymeren.

Aufgrund dieser Gegebenheiten stehen Terpenphenolharze, aromatisch modifizierte KW-Harze und Kolophoniumderivate, hier insbesondere hydrierte Kolophoniumderivate aufgrund des guten Alterungsverhaltens im Focus der Anwendungen.

Alle diese Klebharze haben jedoch den Nachteil, dass die Harze eine mehr oder minder starke Eigenfarbe aufweisen, so dass ein Zusatz dieser Harze zu einer transparent klaren und völlig ungefärbten Haftklebemasse zu einer Verfärbung der Haftklebemasse führt, und die farblos transparente Eigenschaft der Polyacrylathaftklebemasse verloren geht.

Harzabgemischte Polyacrylate, die in Lösung auf einem Trägermaterial beschichtet werden und anschließend bei höheren Temperaturen in einem Trockenkanal getrocknet werden, erfahren eine thermische Belastung, mit der ein Abbau einhergeht, der zu einer leichten Braunfärbung der Haftklebemasse führt. Die lösungsmittelfreie Beschichtung von Polyacrylathaftklebemassen gewinnt aufgrund der weitreichenden Vorteile des lösungsmittelfreien Arbeitens, wie z.B. der Möglichkeit der Beschichtung in dicken Schichten, immer mehr an Bedeutung. Wird eine Haftklebemasse jedoch über ein Heißschmelzverfahren (Hotmeltverfahren) mit lösungsmittelfreier Beschichtungstechnik auf ein Trägermaterial beschichtet, erfährt die Haftklebemasse eine noch höhere thermische Belastung. Temperaturen von ca. 160 °C über Zeiträume bis zu 30 Minuten, und ggf. noch länger, sind durchaus üblich. Eine derartige thermische Belastung führt zu oxidativen Schädigungen der zugesetzten Klebharze, die sich in Abhängigkeit des verwendeten Klebharzes in einer Braunfärbung des Harzes und damit in einer Braunfärbung der harzabgemischten Polyacrylathaftklebemasse widerspiegelt.

Die Verwendung von Alterungsschutzmitteln vom Typ der thioalkylsubstituierten Kresolderivate für harzabgemischte Polyacrylathaftklebemassen mit dem Ziel, die Farbe des Compounds zu stabilisieren, wurde im Stand der Technik bisher nicht durchgeführt.

Derartige Alterungsschutzmittel wurden in der Vergangenheit nur in Kombination mit für Haftklebeanwendungen geeigneten doppelbindungshaltigen Elastomeren beschrieben.

So beschreiben Schmierer et al in US20080070053 und Miller et al in WO2008036322 den Einsatz von 4,6-Bis(dodecy)thiomethyl)-o-Kresol als Alterungsschutzmittel in hochscherfesten Haftklebemassen auf Basis von Styrol-Blockcopolymeren. Mäder et al setzen in WO2006128799 thioalkylsubstituierte Kresole zum Schutz gegen photooxidativen Abbau in butadienhaltigen Copolymeren ein. In WO2006095015 werden von Dubois et al Alterungsschutzmittelpakete mit Irganox 1726 für Haftklebemassen auf Basis unterschiedlicher Blockcopolymeren und Klebharzen eingesetzt. In WO2006003092 wird von Maeder et al 4,6-Bis(dodecylthiomethyl)-o-Kresol zur Stabilisierung von Polyetherpolyolen, Polyesterpolyolen und Polyurethanen genutzt.

Aufgabe der Erfindung war es, hier Abhilfe zu schaffen und eine Möglichkeit aufzuzeigen, wie klebharzabgemischte Polyacrylathaftklebemassen hergestellt werden können, die nach thermischer Belastung, insbesondere nach einer Beschichtung über ein Heißschmelzverfahren, weiterhin eine möglichst helle Farbe zeigen, weitgehend transparent bleiben und sich nicht dunkel verfärben.

Gelöst wurde diese Aufgabe durch Verwendung spezieller Alterungsschutzmittel, die eine primäre und sekundäre Alterungsschutzmittelfunktion in einem Molekül vereint tragen. Dementsprechend betrifft die Erfindung die Verwendung eines ortho-, meta- oder para-Kresol-Derivates, dessen aromatischer Ring an mindestens zwei Kohlenstoffatomen durch schwefelhaltige Substituenten substituiert ist , zur Vermeidung der Dunkelfärbung von zumindest ein Terpenphenolharz enthaltenden Haftklebemassen auf Polyacrylatbasis im Heißschmelzverfahren. Dabei sind die schwefelhaltigen Substituenten Abkömmlinge von Thiolen und/oder Thioethern also solche die Bausteine -S-R und/oder - R-S-R aufweisen (im folgenden als Thioalkylketten bezeichnet), wenn R für organische Reste steht, insbesondere für Kohlenwasserstoffketten (die entsprechend modifizierten Kresolverbindungen werden im folgenden auch als thioalkylmodiflzierte Kresolderivate bezeichnet).
Die Substitution des aromatischen Rings des Kresolderivates mit den vorgenannten Substituenten erfolgt insbesondere an zumindest zweien der C3, C4, C5 und C6-Kohlenstoffatome des aromatischen Rings.

Bei den erfindungsgemäß verwendeten Alterungsschutzmitteln handelt es sich insbesondere um Kresolderivate, deren aromatischer Ring in ortho- und meta-Stellung zur OH-Gruppe (Hydroxygruppe) mit Thioalkylketten substituiert ist, wobei das Schwefelatom unmittelbar (direkt) oder auch mittelbar, insbesondere über eine oder mehrere Alkylketten, mit dem aromatischen Ring des Kresolbausteins verbunden sein kann.

In bevorzugter Weise sind die schwefelhaltigen Substituenten des Kresolderivates gewählt aus der Gruppe G1, umfassend -S-R und -(CH₂)ₓ-S-R, wobei x eine ganze Zahl darstellt und die Reste R unabhängig voneinander organische Reste darstellen, insbesondere bevorzugt gewählt werden aus der Gruppe G3 der verzweigten und unverzweigten, gesättigten, aliphatischen Kohlenwasserstoffgruppen (Alkylgruppen).

Die Anzahl der Kohlenstoffatome zwischen dem Aromaten und dem Schwefelatom liegt vorteilhaft zwischen 1 und 10, bevorzugt zwischen 1 und 4 (so dass insbesondere 1 ≤ x ≤ 10, insbesondere x = 1, 2, 3 oder 4).

Die Anzahl der Kohlenstoffatome der Alkylseitenketten (Alkylgruppen R) liegt bevorzugt im Bereich von 1 bis 25, bevorzugt im Bereich von 6 bis 16. Besonders vorteilhafte Alterungsschutzmittel sind solche, bei denen die Alkylgruppen R solche mit 8, 9, 10, 11 und/oder 12 Kohlenstoffatomen sind.

In einer sehr bevorzugten Weise werden die zwei oder ggf. mehr als zwei schwefelhaltigen Substituenten des Kresolderivates identisch gewählt.

Sehr bevorzugte Beispiele für erfindungsgemäß verwendete Alterungsschutzmittel sind die Verbindungen des Typs der 4,6-Bis(alkylthioalkyl)-o-Kresole, zum Beispiel 4,6-Bis(dodecylthiomethyl)-o-Kresol, 4,6-Bis(undecylthiomethyl)-o-Kresol, 4,6-Bis(decylthiomethyl)-o-Kresol 4,6-Bis(nonylthiomethyl)-o-Kresol und 4,6-Bis(octylthiomethyl)-o-Kresol. Derartige Alterungsschutzmittel werden z.B. von der Firma Ciba unter dem Namen Irganox ® 1726 oder Irganox ® 1520 angeboten.

Die erfindungsgemäß verwendeten Kresolderivat-Alterungsschutzmittel können alleine (ein oder mehrere der Kresol-Alterungsschutzmittel) oder im Gemisch mit anderen Alterungsschutzmitteln eingesetzt werden, wobei als weitere Alterungsschuttzmittel bevorzugt sterisch gehinderten Phenolen und/oder UV-Absorber eingesetzt werden können.

Die Menge des zugesetzten Alterungsschutzmittels bzw. - bei mehreren Alterungsschutzmitteln - der zugesetzten Alterungsschutzmittel liegt vorteilhaft in einem Bereich zwischen 0,1 und 10 Gew.-%, bevorzugt in einem Bereich zwischen 0,2 und 5 Gew.-%, besonders bevorzugt in einem Bereich zwischen 0,5 und 3 Gew.-%, bezogen auf den Gesamtfeststoffgehalt.

Bei den Polyacrylathaftklebemassen (Haftklebemassen auf Polyacrylatbasis) handelt es sich um gesättigte Systeme, also um solche Polymere, die keine - oder nur eine unwesentliche Restzahl - an Doppelbindungen aufweisen.

Als Klebharz enthält die Klebmasse zumindest ein Terpenphenolharz.

### Experimentelle Untersuchungen

Es wurden Polyacrylatcopolymere unterschiedlicher Zusammensetzung auf Basis von 2-Ethylhexylacrylat, Butylacrylat Glycidylmethacrylat und Acrylsäure in Kombination mit unterschiedlichen Klebharzen, insbesondere Terpenphenolharzen untersucht.

Beispielhaft seien folgende Harze genannt:

| *Harze:* | Stoffklasse | Erweichungspunkt (R&B): |
|---|---|---|
| DT110 (DRT) | Terpenphenolharz | 115 °C |
| TP115 (Arizona) | Terpenphenolharz | 115 °C |
| TP95 (Arizona) | Terpenphenolharz | 95 °C |
| TF-100 (Xinyi) | Terpenphenolharz | 100 °C |

Die Farbe der eingesetzten Polyacrylathaftklebemassen war in allen Fällen erwartungsgemäß stabil. Die eingesetzten Klebharze wiesen alle eine mehr oder weniger starke Eigenfarbe auf, die sich in Abhängigkeit der Lagertemperatur weiter nach dunkleren Farben veränderte. Terpenphenolharze mit niedrigen Erweichungspunkt zeigten dabei eine stärkere Neigung, sich unter Temperatureinfluss dunkel zu verfärben. Klassische primäre oder sekundäre Antioxidantien vom Typ der sterisch gehinderten Amine oder Phosphite oder organische Sulfide zeigten bei den durchgeführten Untersuchungen keine nennenswerten Wirkungen. Untersucht wurden unter anderem 2,6-Di-t-butyl-4-metylphenol (BHT), Tetrakis(methylene 3-3,5-di-t-butyl-4-hydroxyphenyl)propionat)methan (Irganox 1010), 2,4-Bis(n-octylthio)-6-(4-hydroxy-3,5-di-t-butylanilino)1,3,5-triazin (Irganox565) oder Tris(di-nonylphenyl)-phosphit (Irgafos TNPP) oder Gemische daraus.
Die eingesetzten Mengen lagen hierbei zwischen 0,2 und 2 Gew.-%, bezogen auf den Feststoffgehalt der Haftklebemasse.
Im Rahmen der durchgeführten Versuche wurde gefunden, dass die für ungesättigte Elastomere bekannten Alterungsschutzmittel nicht hinreichend stabilisierend auf die Farbe von Polyacrylat-Klebharz-Compounds wirken.

Eine sehr gute Wirkung hinsichtlich der Stabilisierung der Farbe der Haftklebemasse bei höheren Temperaturen konnte nur mit Alterungsschutzmittel aus der Gruppe der erfindungsgemäßen Alterungsschutzmittel, hier insbesondere 4,6-Bis(alkylthioalkyl)-o-Kresole, vorzugsweise Irganox ® 1726 und Irganox ® 1520, erzielt werden.

Durch Einsatz der erfindungsgemäßen Alterungsschutzmitteln konnte bewirkt werden, dass die harzabgemischten Haftklebemassen - auch bei thermischer Belastung - keine Neigung zeigten, über die Zeit dunkler zu werden. Es konnte sogar teilweise eine Aufhellung der Haftklebemassen durch Einsatz der erfindungsgemäßen Alterungsschutzmittel festgestellt werden.

Hierdurch wird es ermöglicht, die harzabgemischten Haftklebemassen auch im Heißschmelzverfahren (Hormelt-Verfahren) einzusetzen, ohne dass es zu einer Dunkelfärbung der Haftklebemassen kommt. Somit können auf einfache Weise auch im Heißschmelzverfahren hervorragend harzabgemischte Haftklebemassen verarbeitet und helle, transparente und/oder farblose Produkte hergestellt werden.

Die Ergebnisse der durchgeführten Untersuchungen sind in der folgenden Tabelle zusammengefasst.

Dabei bedeuten:
- Irganox 1520: 4,6-Bis(octylthiomethyl)-o-Kresol (Irganox® 1520; Fa. Ciba)
- Irganox 1726: 4,6-Bis(dodecylthiomethyl)-o-Kresol (Irganox® 1726; Fa. Ciba)
- DT110: Terpenphenolharz, Erweichungspunkt 115°C (Dertophene®T 110; Fa. DRT; Erweichungspunkt nach Herstellerangabe 111 °C)
- TP115: Terpenphenolharz, Erweichungspunkt 115 °C (Sylvares® TP 115, Fa. Arizona)
- TP95 (Arizona): Terpenphenolharz, Erweichungspunkt 95 °C (Sylvares® TP 95, Fa. Arizona)
- TF-100: Terpenphenolharz, Erweichungspunkt 100 °C (TF-1000, Fa. Xinyi))
- Tinuvin 765: UV-Absorber; Mischung aus Bis(1,2,2,6,6-pentamethyl-4-piperidyl)sebacat und Methyl-1,2,2,6,6-pentamethyl-4-piperidyl- sebacat (CAS 41556-26-7 und 82919-37-7); (Tinuvin® 765, Fa. Ciba)
- Irgafos 168: Tris(2,4-di-tert-butylphenyl)phosphit (CAS 31570-04-4) (Irgafos® 168, Fa. Ciba)
- Irgavos P-EPQ: Tetrakis(2,4-di-tert-Butylphenyl) 4,4-biphenyldiphosphonit (CAS 119345-01-6) (Irgafos® P-EPQ, Fa. Ciba)
- Desmodur N3600: Aliphatisches Polyisocyanat [niedrigviskoses Hexamethylen Diisocyanate(HDI)-Trimerisat] (Desmodur® N3600, Fa. BayerMaterialScience)
- Irganox 1010: Tetrakis-(Methylen-(3,5-di-(tert)-butyl-4-hydrocinnamat))methan (CAS 6683-19-8) (Irganox® 1010, Fa. Ciba)
- BHT: Butylhydroxytoluol (= 2,6-Di-tert-butyl-p-kresol) (CAS 128-37-0)

Die Namen der bezeichneten Verbindungen unterliegen teilweise dem Markenschutz. Das Fortlassen einer entsprechenden Kennung in derTabelle bedeutet nicht, dass es sich um frei verwendbare Bezeichnungen handeln würde.

Die Mengenangaben in der Tabelle beziehen sich auf Gewichtsteile (TL).

| | |
|---|---|
| Masseauftrag: 50 g/cm² | Bestimmung der Farben und des Glanz mit BYK Gardner spectro-guide Farbmessgerät. |
| | Bestimmung der Farben erfolgte nach der CIELab Skala mit der Lichtart D65/10°. |
| | L*= Helligkeit (0=Schwarz, 100=Weiß) |
| | b*= Gelb-Blau (-120=blau, +120=Gelb) |
| | a*= Rot-Grün (-120=Grün + 120=Rot) |

### keine thermische Belastung (Trocknung bei RT)

| Nr. | | **L*** | **a*** | **b*** |
|---|---|---|---|---|
| 1 | 70TL Polyacrylat + 30TL DT110 | 90,35 | -0,86 | 9,03 |
| 2 | 70TL Polyacrylat + 30TL TP115 | 90,2 | -0,65 | 9,37 |
| 3 | 70TL Polyacrylat + 30TL TP95 | 30,21 | -0,76 | 9,61 |
| 4 | 70TL Polyacrylat + 30TL TF100 | 90,12 | -2,22 | 13,34 |
| 5 | 70TL Polyacrylat + 30TL TP95 + 1TL Irganox 1726 | 89,93 | -0,04 | 7,67 |
| 6 | 70TL Polyacrylat + 30TL TP95 + 1TL Irganox 1726 + 1TL Tinuvin 765 | 90,12 | 0,21 | 6,79 |
| 7 | 70TL Polyacrylat + 30TL TP95 + 1TL Irganox 1726 + 1TL Irgafos 168 | 90,4 | 0,27 | 6,34 |
| 8 | 70TL Polyacrylat + 30TL TP95 + 2TL Irganox 1726 | 90,45 | 0,31 | 6,21 |
| 9 | 70TL Polyacrylat + 30TL TP95 + 2TL Irganox 1726 + 2TL Tinuvin 765 | 90,42 | 0,36 | 6,21 |
| 10 | 70TL Polyacrylat + 30TL TP95 + 2TL Irganox 1726 + 2TL Irgafos 168 | 90,35 | 0,31 | 6,32 |
| 11 | 70TL Polyacrylat + 30TL TP95 + 0,5TL Irganox 1726 | 90,27 | 0,09 | 6,89 |
| 12 | 70TL Polyacrylat + 30TL TP95 + 0,5TL Irganox 1726 + 0,5TL Tinuvin 765 | 90,45 | 0,28 | 6,43 |
| 13 | 70TL Polyacrylat + 30TL TP95 + 0.5TL Irganox 1726 + 0,5TL Irgafos 168 | 90,36 | 0,08 | 6,93 |
| 14 | 70TL Polyacrylat + 30TL TP95 + 1TL Irganox 1726 + 1TL Irgafos P-EPQ | 90,31 | 0,13 | 7,11 |
| Polyacrylat (Referenz) | | 90,4 | 1,01 | 4,04 |

### Normale Trocknung 15 min 120°C

| Nr. | | **L*** | **a*** | **b*** |
|---|---|---|---|---|
| 15 | 70TL Polyacrylat + 30TL DT110 | 90,22 | -0,88 | 9,29 |
| 16 | 70TL Polyacrylat + 30TL TP115 | 90,14 | -0,55 | 9,19 |
| 17 | 70TL Polyacrylat + 30TL TP95 | 90,07 | -0,7 | 9,65 |
| 18 | 70TL Polyacrylat + 30TL TF100 | 90,07 | -2,28 | 13,87 |
| 19 | 70TL Polyacrylat + 30TL TP95 + 1TL Irganox 1726 | 90,25 | 0,1 | 6,94 |
| 20 | 70TL Polyacrylat + 30TL TP95 + 1TL Irganox 1726 + 1TL Tinuvin 765 | 90,43 | 0,34 | 6,21 |
| 21 | 70TL Polyacrylat + 30TL TP95 + 1TL Irganox 1726 + 1TL Irgafos 168 | 90,33 | 0,28 | 6,43 |
| 22 | 70TL Polyacrylat + 30TL TP95 + 2TL Irganox 1726 | 90,51 | 0,37 | 6,09 |
| 23 | 70TL Polyacrylat + 30TL TP95 + 2TL Irganox 1726 + 2TL Tinuvin 765 | 90,43 | 0,45 | 6 |
| 24 | 70TL Polyacrylat + 30TL TP95 + 2TL Irganox 1726 + 2TL Irgafos 168 | 90,46 | 0,28 | 6,41 |
| 25 | 70TL Polyacrylat + 30TL TP95 + 0,5TL Irganox 1726 | 90,56 | 0,25 | 6,34 |
| 26 | 70TL Polyacrylat + 30TL TP95 + 0,5TL Irganox 1726 + 0,5TL Tinuvin 765 | 90,19 | 0,28 | 6,62 |
| 27 | 70TL Polyacrylat + 30TL TP95 + 0,5TL Irganox 1726 + 0,5TL Irgafos 168 | 90,44 | 0,15 | 6,75 |
| 28 | 70TL Polyacrylat + 30TL TP95 + 1TL Irganox 1726 + 1TL Irgafos P-EPQ | 90,31 | 0,1 | 7,31 |
| | Polyacrylat (Referenz) Nicht thermisch belastet | 90,4 | 1,01 | 4,04 |

### zusätzliche thermische Belastung 10 min bei 140°C

| Nr. | | **L*** | **a*** | **b*** |
|---|---|---|---|---|
| 29 | 70TL Polyacrylat + 30TL DT110 | 90,14 | -1,01 | 10,16 |
| 30 | 70TL Polyacrylat + 30TL TP115 | 89,86 | -0,59 | 10,04 |
| 31 | 70TL Polyacrylat + 30TL TP95 | 90,11 | -0,66 | 10,16 |
| 32 | 70TL Polyacrylat + 30TL TF100 | 89,68 | -2,33 | 15,54 |
| 33 | 70TL Polyacrylat + 30TL TP95 + 1TL Irganox 1726 | 90,32 | 0,17 | 6,76 |
| 34 | 70TL Polyacrylat + 30TL TP95 + 1TL Irganox 1726 + 1TL Tinuvin 765 | 90,38 | 0,28 | 6,65 |
| 35 | 70TL Polyacrylat + 30TL TP95 + 1TL Irganox 1726 + 1TL Irgafos 168 | 90,4 | 0,26 | 6,46 |
| 36 | 70TL Polyacrylat + 30TL TP95 + 2TL Irganox 1726 | 90,52 | 0,28 | 6,41 |
| 37 | 70TL Polyacrylat + 30TL TP95 + 2TL Irganox 1726 + 2TL Tinuvin 765 | 90,48 | 0,32 | 6,43 |
| 38 | 70TL Polyacrylat + 30TL TP95 + 2TL Irganox 1726 + 2TL Irgafos 168 | 90,39 | 0,22 | 6,65 |
| 39 | 70TL Polyacrylat + 30TL TP95 + 0,5TL Irganox 1726 | 90,52 | 0,1 | 6,8 |
| 40 | 70TL Polyacrylat + 30TL TP95 + 0,5TL Irganox 1726 + 0,5TL Tinuvin 765 | 90,35 | 0,26 | 6,58 |
| 41 | 70TL Polyacrylat + 30TL TP95 + 0,5TL Irganox 1726 + 0,5TL Irgafos 168 | 90,47 | 0,05 | 6,99 |
| 42 | 70TL Polyacrylat + 30TL TP95 + 1TL Irganox 1726 + 1TL Irgafos P-EPQ | 90,27 | -0,01 | 7,75 |
| | Polyacrylat (Referenz) nicht thermisch belastet | 90,4 | 1,01 | 4,04 |

### zusätzliche thermische Belastung 3 Std. bei 140°C

| Nr. | | **L*** | **a*** | **b*** |
|---|---|---|---|---|
| 43 | 70TL Polyacrylat + 30TL DT110 | 86,92 | -0,24 | 22,45 |
| 44 | 70TL Polyacrylat + 30TL TP115 | 85,89 | 0,65 | 23,87 |
| 45 | 70TL Polyacrylat + 30TL TP95 | 87,62 | -0,52 | 20 |
| 46 | 70TL Polyacrylat + 30TL TF100 | 85,86 | -0,6 | 28,87 |
| 47 | 70TL Polyacrylat + 30TL TP95 + 1TL Irganox 1726 | 89,42 | -0,61 | 11,68 |
| 48 | 70TL Polyacrylat + 30TL TP95 + 1TL Irganox 1520 | 87,92 | -0,62 | 11,92 |
| 49 | 70TL Polyacrylat + 30TL TP95 + 1TL Irganox 1726 + 1TL Tinuvin 765 | 88,87 | -0,02 | 12,31 |
| 50 | 70TL Polyacrylat + 30TL TP95 + 1TL Irganox 1726 + 1TL Irgafos 168 | 89,65 | -0,4 | 10,51 |
| 51 | 70TL Polyacrylat + 30TL TP95 + 2TL Irganox 1726 | 89,81 | -0,3 | 9,82 |
| 52 | 70TL Polyacrylat + 30TL TP95 + 2TL Irganox 1520 | 89,69 | -0,34 | 10,12 |
| 53 | 70TL Polyacrylat + 30TL TP95 + 2TL Irganox 1726 + 2TL Tinuvin 765 | 89,78 | -0,06 | 9,35 |
| 54 | 70TL Polyacrylat + 30TL TP95 + 2TL Irganox 1726 + 2TL Irgafos 168 | 89,41 | -0,39 | 12,51 |
| 55 | 70TL Polyacrylat + 30TL TP95 + 0,5TL Irganox 1726 | 88,38 | -0,03 | 14,53 |
| 56 | 70TL Polyacrylat + 30TL TP95 + 0,5TL Irganox 1726 + 0,5TL Tinuvin 765 | 88,63 | 0,07 | 12,77 |
| 57 | 70TL Polyacrylat + 30TL TP95 + 0,5TL Irganox 1726 + 0,5TL Irgafos 168 | 88,58 | -0,27 | 14,94 |
| 58 | 70TL Polyacrylat + 30TL TP95 + 1TL Irganox 1726 + 1TL Irgafos P-EPQ | 89,64 | -0,39 | 10,97 |
| 59 | 70TL Polyacrylat + 30TL TP95 + 1TL Irganox 1010 | 86,31 | -0,48 | 19,2 |
| 60 | 70TL Polyacrylat + 30TL TP95 + 2TL BHT | 90,34 | -0,42 | 18,94 |
| | Polyacrylat (Referenz) Nicht thermisch belastet | 90,4 | 1,01 | 4,04 |

Bedeutungsvoll für die Beurteilung der Gelbfärbung ist die Farbverschiebung auf der b*-Achse im dreidimensionalen Farbraum.
Wie aus den Tabellen zu entnehmen ist, verändern sich die Polyacrylat-Compounds nach Zusatz von 1 oder 2 % Irganox 1726 auch nach Temperaturbelastung nicht nennenswert. Mit Irganox 1726 gelingt auch die Stabilisierung von Terpenphenolharzen mit relativ niedrigen Erweichungspunkten (95 °C), die hinsichtlich ihrer Farbstabilität unter Temperatureinfluss (bis ca. 160 °C) häufig instabiler sind als Terpenphenolharze mit Erweichungspunkten oberhalb 110°C.

Eine Erhöhung der Konzentration an Irganox 1726 wirkt sich stabilisierend auf die Farbe des Compounds aus. Auch das Beispiel mit Irganox 1520 zeigt dieses Verhalten.

### Beispiele

### Beispiel 1:

Eine durch radikalische Polymerisation in Benzin 60/95 hergestellte Polyacrylathaftklebemasse bestehend aus einem Copolymer basierend auf 48,5 Mol% 2-Ethylhexylacrylat, 48,5 Mol% Butylacrylat, 1 Mol% Acrylsäure und 2 Mol% Glycidylmethacrylat mit einer gewichtsmittleren Molmasse (M_{w}) von ca. 1,5 Millionen g/mol wird mit ca. 30 Gew.% des Terpenphenolharz TP95 von Arizona compoundiert. Dem Compound werden anschließend 2 Gew. % Irganox 1726 gelöst in Benzin 60/95 zugegeben. Der Compound wird anschließend mittels einer Rollbank für 24 homogenisiert.
Die so erhaltene harzabgemischte Polyacrylathaftklebemasse wird mit einer Laborbeschichtungsanlage mit einem Streichmesser auf eine geätzte PET Folie mit einem Masseauftrag von 50g/m² beschichtet.
Das beschichtete Material wird für 24 Stunden bei Raumtemperatur getrocknet und als Referenz im Hinblick auf die Farbe vermessen.
Im Anschluss daran wird das Referenzmaterial in einem Umlufttrockenschrank für 3 Stunden bei 150°C getempert.
Die Farbe und der Glanz der unterschiedlich gelagerten Klebebänder sowie des ungelagerten Klebebandes wurden mit Hilfe eines BYK Gardner spectro-guide Farbmessgerät gemessen. Die Bestimmung der Farben erfolgte nach der CIELab Skala mit der Lichtart D65/10°.
Die Definition der Farben im betrachteten dreidimensionalen Farbraum sind wie folgt:
- L* = Helligkeit (0 = schwarz, 100 = weiß)
- a* = Rot - Grün (-120 = Grün, +120 = Rot)
- b*= Gelb - Blau (-120 = Blau, +120 = Gelb)

Von jeder Probe wurden je 3 Messungen an 3 verschiedenen Messpunkten vorgenommen. Als Referenz wurde eine weiße Fliese verwendet (V+B Steinzeug, Artikel-Nr. 1106 TW01, Nuance 45X). Die Muster wurden anschließend auf einer Referenz-Fliese verklebt und vermessen.

### Ergebnisse:

### Farbmessung

| Muster | Thermische Belastung | L* | a* | b* |
|---|---|---|---|---|
| Polyacrylatklebemasse gemäß Beispiel 1 | Ohne | 30,21 | -0,76 | **9,61** |
| Polyacrylatklebemasse gemäß Beispiel 1 | 3 Stunden bei 150°C | 89,81 | -0,3 | **9,82** |
| Polyacrylatklebemasse gemäß Beispiel 1 **ohne** Alterungsschutzmittel | 3 Stunden bei 150°C | 87,62 | -0,52 | **20** |

### Beispiel 2:

Eine durch radikalische Polymerisation in Benzin 60/95 hergestellte Polyacrylathaftklebemasse bestehend aus einem Copolymer basierend auf 48,5 Mol% 2-Ethylhexylacrylat, 48,5 Mol% Butylacrylat, 1 Mol% Acrylsäure und 2 Mol% Glycidylmethacrylat mit einer gewichtsmittleren Molmasse (M_{w}) von ca.1,5 Millionen g/mol wird mit ca. 30 Gew.% des Terpenphenolharz TP95 von Arizona compoundiert. Dem Compound werden anschließend eine Mischung aus 1 Gew.% Irganox 1726 und 1 Gew.% Irgafos 168 gelöst in Benzin 60/95 zugegeben. Der Compound wird anschließend mittels einer Rollbank für 24 homogenisiert.
Die so erhaltene harzabgemischte Polyacrylathaftklebemasse wird mit einer Laborbeschichtungsanlage mit einem Streichmesser auf eine geätzte PET Folie mit einem Masseauftrag von 50g/m² beschichtet.
Das beschichtete Material wird für 24 Stunden bei Raumtemperatur getrocknet und als Referenz im Hinblick auf die Farbe vermessen.
Im Anschluss daran wird das Referenzmaterial in einem Umlufttrockenschrank für 3 Stunden bei 150°C getempert.
Die Farbe und der Glanz der unterschiedlich gelagerten Klebebänder sowie des ungelagerten Klebebandes wurden mit Hilfe eines BYK Gardner spectro-guide Farbmessgerät gemessen. Die Bestimmung der Farben erfolgte nach der CIELab Skala mit der Lichtart D65/10°.
Die Definition der Farben im betrachteten dreidimensionalen Farbraum sind wie folgt:
- L* = Helligkeit (0 = schwarz, 100 = weiß)
- a* = Rot - Grün (-120 = Grün, +120 = Rot)
- b*= Gelb - Blau (-120 = Blau, +120 = Gelb)

Von jeder Probe wurden je 3 Messungen an 3 verschiedenen Messpunkten vorgenommen. Als Referenz wurde eine weiße Fliese verwendet (V+B Steinzeug, Artikel-Nr. 1106 TW01, Nuance 45X). Die Muster wurden anschließend auf einer Referenz-Fliese verklebt und vermessen.

### Ergebnisse:

### Farbmessung

| Muster | Thermische Belastung | L* | a* | b* |
|---|---|---|---|---|
| Polyacrylatklebemasse gemäß Beispiel 1 | Ohne | 30,21 | -0,76 | **9,61** |
| Polyacrylatklebemasse gemäß Beispiel 1 | 3 Stunden bei 150°C | 89,81 | -0,3 | **10,51** |
| Polyacrylatklebemasse gemäß Beispiel 1 **ohne** Alterungsschutzmittel | 3 Stunden bei 150°C | 87,62 | -0,52 | **20** |

### Beispiel 3:

Eine durch radikalische Polymerisation in Benzin 60/95 hergestellte Polyacrylathaftklebemasse bestehend aus einem Copolymer basierend auf 48,5 Mol% 2-Ethylhexylacrylat, 48,5 Mol% Butylacrylat, 1 Mol% Acrylsäure und 2 Mol% Glycidylmethacrylat mit einer gewichtsmittleren Molmasse (M_{w}) von ca.1,5 Millionen g/mol wird mit ca. 30 Gew.% des Terpenphenolharz TP95 von Arizona compoundiert. Dem Compound werden anschließend eine Mischung aus 1 Gew.% Irganox 1726 und 1 Gew.% Tinuvin 765 gelöst in Benzin 60/95 zugegeben. Der Compound wird anschließend mittels einer Rollbank für 24 homogenisiert.
Die so erhaltene harzabgemischte Polyacrylathaftklebemasse wird mit einer Laborbeschichtungsanlage mit einem Streichmesser auf eine geätzte PET Folie mit einem Masseauftrag von 50g/m² beschichtet.
Das beschichtete Material wird für 24 Stunden bei Raumtemperatur getrocknet und als Referenz im Hinblick auf die Farbe vermessen.
Im Anschluss daran wird das Referenzmaterial in einem Umlufttrockenschrank für 3 Stunden bei 150°C getempert.
Die Farbe und der Glanz der unterschiedlich gelagerten Klebebänder sowie des ungelagerten Klebebandes wurden mit Hilfe eines BYK Gardner spectro-guide Farbmessgerät gemessen. Die Bestimmung der Farben erfolgte nach der CIELab Skala mit der Lichtart D65/10°.

Die Definition der Farben im betrachteten dreidimensionalen Farbraum sind wie folgt:
- L* = Helligkeit (0 = schwarz, 100 = weiß)
- a* = Rot - Grün (-120 = Grün, +120 = Rot)
- b*= Gelb - Blau (-120 = Blau, +120 = Gelb)

Von jeder Probe wurden je 3 Messungen an 3 verschiedenen Messpunkten vorgenommen. Als Referenz wurde eine weiße Fliese verwendet (V+B Steinzeug, Artikel-Nr. 1106 TW01, Nuance 45X). Die Muster wurden anschließend auf einer Referenz-Fliese verklebt und vermessen.

### Ergebnisse:

### Farbmessung

| Muster | Thermische Belastung | L* | a* | b* |
|---|---|---|---|---|
| Polyacrylatklebemasse gemäß Beispiel 1 | Ohne | 30,21 | -0,76 | **9,61** |
| Polyacrylatklebemasse gemäß Beispiel 1 | 3 Stunden bei 150°C | 89,81 | -0,3 | **12,31** |
| Polyacrylatklebemasse gemäß Beispiel 1 **ohne** Alterungsschutzmittel | 3 Stunden bei 150°C | 87,62 | -0,52 | **20** |

### Beispiel 4:

Ein durch radikalische Lösemittelpolymerisierung hergestelltes Acrylatgerüstpolymer basierend auf 45 Mol% 2-Ethylhexylacrylat, 45 Mol% n-Butylacrylat, 8 Mol% Methylacrylat, 1 Mol% Acrylsäure und 1 Mol% 2 Hydroxy-ethylmethylacrylat mit einem K-Wert von 62, einer gewichtsmittleren Molmasse (M_{w}) von 605000 g/mol und einer Polydispersität von 8,6 (Feststoffgehalt ca. 55%), wurde mittels eines BERSTOFF-Einschneckenextruders (Aufkonzentrationsextruder) weitestgehend vom Lösemittel befreit. Die Austrittstemperatur lag bei 105°C, der Feststoffgehalt betrug 99,7%.
Die Acrylatschmelzhaftklebemasse wurde im Anschluss in einem nachgeschalteten WELDING-Doppelschneckenextruder eingebracht und über ein Feststoffdosiersystem ein Tackifierharz und ein Alterungsschutzmittel zudosiert. Bei dem zudosierten Tackifierharz handelte es sich um das Terpenphenolharz TP95 (Arizona Chemicals) mit dem einem R&B von 95°C. Als Antioxidationsmittel wurde Irganox 1726 (4,6-Bis (dodecylthiomethyl)-o-Kresol) von Ciba eingesetzt.

Der so hergestellte Compound besteht aus 70 Gew. Teilen Acrylatgerüstpolymer, 30 Gew. Teilen Klebharz und 1 Gew.Teil Alterungsschutzmittel.

Die Acryalschmelzhaftklebemasse wurde anschließend in einem Fütterextruder aufgeschmolzen und als Polymerschmelze in einen Doppelschneckenextruder eingefahren.

Der Vernetzer wurde mit Hilfe einer geeigneten Dosiereinrichtung der Haftklebemasse im Doppelschneckenextruder zugegeben. Zugesetzt wurden 0,45Gew. % (bezogen auf das Acrylatcopolymer)des trimerisierten HDI-Polyisocyanates Desmodur N3600 (Bayer AG).

Nach Austritt der abgemischten und vernetzten Haftklebmasse aus dem Doppelschneckenextruder erfolgte eine Beschichtung auf einer vorgestrichenen 23µm PET-Folie mit Hilfe eines 2-Walzenauftragswerk mit einem Masseauftrag von 50g/m².

Das beschichtete Trägermaterial wurde anschließend drei Tage bei Raumtemperatur konditioniert.

Nach der Konditionierung erfolgen thermische Belastungen, um die Verfärbungsneigung des Acrylatschmelzklebers bei höheren Temperaturen zu ermitteln:
- 10 Minuten bei 140 °C im Trockenschrank
- 20 Minuten bei 140 °C im Trockenschrank
- 3 Stunden bei 140 °C im Trockenschrank

Die Farbe und der Glanz der unterschiedlich gelagerten Klebebänder sowie des ungelagerten Klebebandes wurden mit Hilfe eines BYK Gardner spectro-guide Farbmessgerät gemessen. Die Bestimmung der Farben erfolgte nach der CIELab Skala mit der Lichtart D65/10°.
Die Definition der Farben im betrachteten dreidimensionalen Farbraum sind wie folgt:
- L* = Helligkeit (0 = schwarz, 100 = weiß)
- a* = Rot - Grün (-120 = Grün, +120 = Rot)
- b*= Gelb - Blau (-120 = Blau, +120 = Gelb)

Von jeder Probe wurden je 3 Messungen an 3 verschiedenen Messpunkten vorgenommen. Als Referenz wurde eine weiße Fliese verwendet (V+B Steinzeug, Artikel-Nr. 1106 TW01, Nuance 45X). Die Muster wurden anschließend auf einer Referenz-Fliese verklebt und vermessen.

## Patentansprüche

1. **Verwendung zumindest eines** Ortho-, Meta- oder Para-Kresolderivates, dessen aromatischer Ring an mindestens zwei Kohlenstoffatomen substituiert ist, wobei die Substituenten Abkömmlinge von Thiolen und/oder Thioethern darstellen ("schwefelhaltige Substituenten"), **zur Vermeidung der Dunkelfärbung von zumindest ein Terpenphenolharz enthaltenden Haftklebemassen auf Polyacrylatbasis im Heißschmelzverfahren**.

2. **Verwendung** nach Anspruch 1, **dadurch gekennzeichnet, dass**
die Substituenten des Kresolderivats gewählt sind aus der Gruppe G1,
umfassend -S-R und -(CH₂)ₓ-S-R,
wobei x eine ganze Zahl darstellt und die Reste R unabhängig voneinander organische Reste darstellen.

3. **Verwendung** nach zumindest einem der vorangehenden Ansprüche,
**dadurch gekennzeichnet, dass**
das Kresolderivat ein Ortho-Kresolderivat ist.

4. **Verwendung** nach zumindest einem der vorangehenden Ansprüche,
**dadurch gekennzeichnet, dass**
die zumindest zwei schwefelhaltigen Substituenten des Kresolderivates identisch gewählt werden.

5. **Verwendung** nach einem der vorangehenden Ansprüche,
**dadurch gekennzeichnet, dass**
die schwefelhaltigen Substituenten des Kresolderivates in Ortho- und in Metastellung zur Hydroxygruppe stehen.

6. **Verwendung** nach zumindest einem der Ansprüche 2 bis 5
**dadurch gekennzeichnet, dass**
1 ≤ x ≤ 10, insbesondere x = 1, 2, 3 oder 4.

7. **Verwendung nach einem der vorangehenden Ansprüche, dadurch gekennzeichnet, dass als Kresolderivat** 4,6-Bis(alkythioalkyl)-o-cresol **eingesetzt** wird, insbesondere 4,6-Bis(dodecylthiomethyl)-o-cresol, 4,6-Bis(decylthiomethyl)-o-cresol, 4,6-Bis(nonylthiomethyl)-o-cresol und/oder 4,6-Bis-(octylthiomethyl)-o-cresol.

8. **Verwendung** nach zumindest einem der vorangehenden Ansprüche, **dadurch gekennzeichnet, dass die Haftklebemasse** weitere sterisch gehinderte Phenolderivate **enthält.**

9. **Verwendung** nach zumindest einem der vorangehenden Ansprüche, **dadurch gekennzeichnet, dass die Haftklebemasse** UV-Absorber **enthält.**

## Claims

1. Use of at least one ortho-, meta- or para-cresol derivative whose aromatic ring is substituted on at least two carbon atoms, the substituents constituting derivatives of thiols and/or thioethers ("sulfur-containing substituents"), for preventing the darkening of polyacrylate-based pressure-sensitive adhesives comprising at least one terpene-phenolic resin in a hot-melt process.

2. Use according to Claim 1, **characterized in that** the substituents of the cresol derivative are selected from the group G1,
encompassing -S-R and -(CH₂)ₓ-S-R,
where x represents a whole number and the radicals R independently of one another represent organic radicals.

3. Use according to at least one of the preceding claims, **characterized in that** the cresol derivative is an ortho-cresol derivative.

4. Use according to at least one of the preceding claims, **characterized in that** the at least two sulfur-containing substituents of the cresol derivative are selected identically.

5. Use according to any of the preceding claims, **characterized in that** the sulfur-containing substituents of the cresol derivative are in ortho- and meta-position to the hydroxyl group.

6. Use according to at least one of Claims 2 to 5, **characterized in that** 1 ≤ x ≤ 10, more particularly x = 1, 2, 3 or 4.

7. Use according to any of the preceding claims, **characterized in that** 4,6-bis(alkylthioalkyl)-o-cresol is used as cresol derivative, more particularly 4,6-bis(dodecylthiomethyl)-o-cresol, 4,6-bis(decyl-thiomethyl)-o-cresol, 4,6-bis(nonylthiomethyl)-o-cresol and/or 4,6-bis(octylthiomethyl)-o-cresol.

8. Use according to at least one of the preceding claims, **characterized in that** the pressure-sensitive adhesive comprises further sterically hindered phenol derivatives.

9. Use according to at least one of the preceding claims, **characterized in that** the pressure-sensitive adhesive comprises UV absorbers.

## Revendications

1. Utilisation d'au moins un dérivé d'ortho-crésol, de méta-crésol ou de para-crésol, dont le cycle aromatique est substitué sur au moins deux atomes de carbone, les substituants étant des dérivés de thiols et/ou de thioéthers ("substituants contenant du soufre") pour éviter la coloration foncée de masses autoadhésives à base de polyacrylate, contenant au moins une résine à base de terpène phénolique, dans un procédé de thermofusion.

2. Utilisation selon la revendication 1, **caractérisée en ce que** les substituants du dérivé de crésol sont choisis dans le groupe G1, comprenant -S-R et -(CH₂)ₓ-S-R,
x représentant un nombre entier et les radicaux R valant, indépendamment l'un de l'autre, des radicaux organiques.

3. Utilisation selon au moins l'une quelconque des revendications précédentes, **caractérisée en ce que** le dérivé de crésol est un dérivé d'ortho-crésol.

4. Utilisation selon au moins l'une quelconque des revendications précédentes, **caractérisée en ce que** lesdits au moins deux substituants contenant du soufre du dérivé de crésol sont choisis en étant identiques.

5. Utilisation selon l'une quelconque des revendications précédentes, **caractérisée en ce que** les substituants contenant du soufre du dérivé de crésol se trouvent en position ortho et en position méta par rapport au groupe hydroxy.

6. Utilisation selon au moins l'une quelconque des revendications 2 à 5, **caractérisée en ce que** 1 ≤ x ≤ 10, en particulier x = 1, 2, 3 ou 4.

7. Utilisation selon l'une quelconque des revendications précédentes, **caractérisée en ce que** du 4,6-bis(alkythioalkyl)-o-crésol est utilisé comme dérivé de crésol, en particulier du 4,6-bis(dodécylthiométhyl)-o-crésol, du 4,6-bis(décylthiométhyl)-o-crésol, du 4,6-bis(nonylthiométhyl)-o-crésol et/ou du 4,6-bis-(octylthiométhyl)-o-crésol.

8. Utilisation selon au moins l'une quelconque des revendications précédentes, **caractérisée en ce que** la masse autoadhésive contient d'autres dérivés du phénol stériquement encombrés.

9. Utilisation selon au moins l'une quelconque des revendications précédentes, **caractérisée en ce que** la masse autoadhésive contient des absorbants des UV.
